# EUROPÄISCHE PATENTSCHRIFT

(11) **EP 2 274 187 B1**
(45) Veröffentlichungstag und Bekanntmachung des Hinweises auf die Patenterteilung: **17.08.2011**
(21) Anmeldenummer: 09727015.1
(22) Anmeldetag: 02.04.2009
(51) Int. Cl.: B60T 8/32, G01P 3/44, F16D 65/12

(54) **ANORDNUNG EINER BREMSSCHEIBE AN EINER RADNABE**
ARRANGEMENT OF A BRAKE DISK ON A WHEEL HUB
DISPOSITION D'UN DISQUE DE FREIN SUR UN MOYEU DE ROUE

(30) Priorität: 04.04.2008 DE 102008017360
(43) Veröffentlichungstag der Anmeldung: 19.01.2011
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2009/002396
(87) Internationale Veröffentlichungsnummer: WO 2009/121592

(56) Entgegenhaltungen:
- EP-A- 0 849 487
- WO-A-2007/041518
- DE-B3-102004 034 361

## Beschreibung

Die Erfindung betrifft eine Anordnung einer Bremsscheibe an einer Radnabe gemäß dem Oberbegriff des Anspruchs 1.

Zur Anbindung einer Bremsscheibe an einer Radnabe sowie zur Übertragung eines beim Bremsen entstehenden Bremsmoments auf die Radnabe und damit auf ein angeschlossenes Fahrzeugrad, sind ineinander greifende zahnförmige Formschlussmittel bekannt, die aus am Innenumfang der Bremsscheibe vorgesehenen Stützelementen und damit im Sinne einer Verdrehsicherung korrespondierenden, am Außenumfang der Radnabe angeordneten Mitnehmern bestehen.

Zur axialen Sicherung der Bremsscheibe an der Radnabe sind Stützelemente bekannt, die als Blattfedern ausgebildet und jeweils einerseits an einem Mitnehmer durch Verschrauben befestigt sind und sich andererseits mit ihren beidseitig der Schraube erstreckenden Flügeln unter Federdruck an den benachbarten Stützelementen der Bremsscheibe anliegen.

Im Anbindungsbereich der Bremsscheibe an der Radnabe ist üblicherweise ein Polrad angeordnet, das als Funktionsteil eines Antiblockiersystems (ABS) zum Einsatz kommt. Dabei ist das mit einem Sensor in Wirkverbindung stehende Polrad verdrehsicher an der Radnabe befestigt.

Dies kann beispielsweise durch Verschrauben erfolgen, wie es aus der DE 10 2004 034 361 B3 bekannt ist.

Eine Anordnung nach dem Oberbegriff des Anspruchs 1 ist auch in der WO 2007/041518 A offenbart. Danach sind die Bremsscheibe und das Polrad getrennt mit jeweils eigenen Befestigungselementen befestigt, wodurch u.a. eine geringere Verformung des Polrades durch auftretende Bremsmomente erreicht werden soll.

Befestigungsmöglichkeiten bestehen beispielsweise auch darin, das Polrad in einer Bohrung der Radnabe oder direkt auf dieser durch eine Pressverbindung zu fixieren.

Allerdings ist diese Verbindung problematisch, da durch unterschiedlich starke thermische Ausdehnungen des Polrades und der Radnabe bzw. Bremsscheibe die Gefahr eines Lösens besteht, wodurch die Funktionsfähigkeit des Antiblockiersystems insgesamt stark beeinträchtigt wird. Um diese unterschiedlichen Wärmedehnungen zu kompensieren, ist beispielsweise in der DE 10 2005 056 063 A1 vorgeschlagen, eine Toleranzhülse einzusetzen.

In jedem Fall stellt sich vor allem bei einer gattungsgemäßen halslosen Bremsscheibe die zur Bremsscheibe ortsnahe Anbindung des Polrades, aufgrund der beim Bremsen entstehenden Reibungswärme als problematisch dar, was einer dauerhaft zuverlässigen Funktion des Systems entgegensteht.

Der Erfindung liegt die Aufgabe zugrunde, eine Anordnung der gattungsgemäßen Art so weiterzuentwickeln, dass die Befestigung des Polrades ohne zusätzlichen Montageaufwand möglich ist und die Standzeit der Verbindung des Polrades verbessert wird.

Diese Aufgabe wird durch eine Anordnung mit den Merkmalen des Anspruchs 1 gelöst.

Durch diese konstruktive Ausbildung wird eine Anordnung geschaffen, die den gestellten Anforderungen in jeder Hinsicht gerecht wird. Insbesondere ist die Funktionsfähigkeit des Polrades auch bei schwierigsten Betriebsverhältnissen, d.h. großen thermischen Beanspruchungen, gewährleistet, da in jedem Fall eine sichere Verbindung des Polrades an der Radnabe bzw. der Bremsscheibe besteht.

Da es sich bei den eine erfindungsgemäße Anordnung bildenden Bauteilen in ihrer Gesamtheit um ein sicherheitsrelevantes System handelt, kommt der genannten Verbesserung eine besondere Bedeutung zu.

Aber auch in betriebswirtschaftlicher Hinsicht zeichnet sich die Erfindung gegenüber dem Stand der Technik in besonderer Weise aus.

So ist zu allererst hervorzuheben, dass zur Befestigung des Polrades nun keine besonderen Maßnahmen erforderlich sind.

Weder sind zusätzliche Gewindebohrungen in die Radnabe einzubringen, wie dies bei dem genannten Stand der Technik der Fall ist, noch sind fertigungstechnische Vorkehrungen zu treffen, um das Polrad beispielsweise mit dem entsprechenden Bauteil zu verpressen.

Naturgemäß führt dies zu einer signifikanten Kostenreduzierung, zu der im Übrigen auch eine vereinfachte Demontagemöglichkeit des Polrades beiträgt.

Hierzu ist lediglich das entsprechende Verbindungselement, d.h. die Schraube, mit der das Sicherungselement, also die erwähnte Blattfeder, an dem entsprechenden Mitnehmer der Radnabe gehalten ist, zu lösen, um beispielsweise ein schadhaftes Polrad auszuwechseln.

Darüber hinaus kann das Polrad ohne zusätzliche Fertigungsmaßnahmen hergestellt werden. Es sind lediglich die Anschlussteile anzubringen, die bevorzugt als Anschlusslaschen ausgebildet sind und die zweckmäßigerweise einstückig angeformt sind. In diesem Fall sind lediglich geeignete Umformarbeiten notwendig, wie sie zur Formgebung des Polrades allgemein bereits durchgeführt werden müssen.

Nach einer vorteilhaften Weiterbildung der Erfindung ist vorgesehen, dass die den Anschlusslaschen zugeordneten Mitnehmer Ausnehmungen aufweisen, in denen die Laschen einliegen, wobei die Form und die Abmaße der Ausnehmungen zumindest bereichsweise an die der jeweiligen Anschlusslasche angepasst sind. Hierdurch kann eine Verdrehsicherung des Polrades durch Formgebung erreicht werden, während die axiale Sicherung durch die Klemmung mittels der Blattfedern erfolgt, die die Anschlusslaschen teilweise überdecken.

Ein weiterer Gedanke der Erfindung sieht vor, dass die Anschlussteile, bevorzugt die besagten Anschlusslaschen, etwa L-förmig abgewinkelt am Außenrand des Polrades angeordnet sind, wobei prinzipiell eine geringe Anzahl ausreichend ist, die in dem Winkelabstand zueinander stehen, in dem auch die Mitnehmer der Radnabe positioniert sind, in denen die Anschlusslaschen einliegen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäß ausgebildeten Anordnung in einer perspektivischen Vorderansicht
- Figur 2: einen Längsschnitt durch die Anordnung, gleichfalls in einem Teilaus- schnitt
- Figur 3: ein Polrad nach der Erfindung in einer perspektivischen Ansicht.

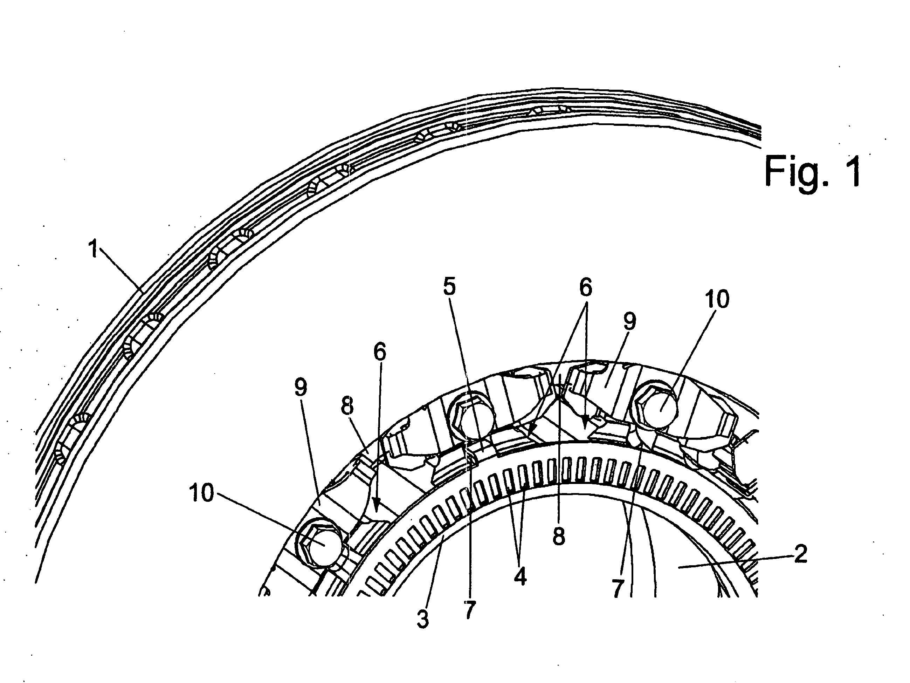

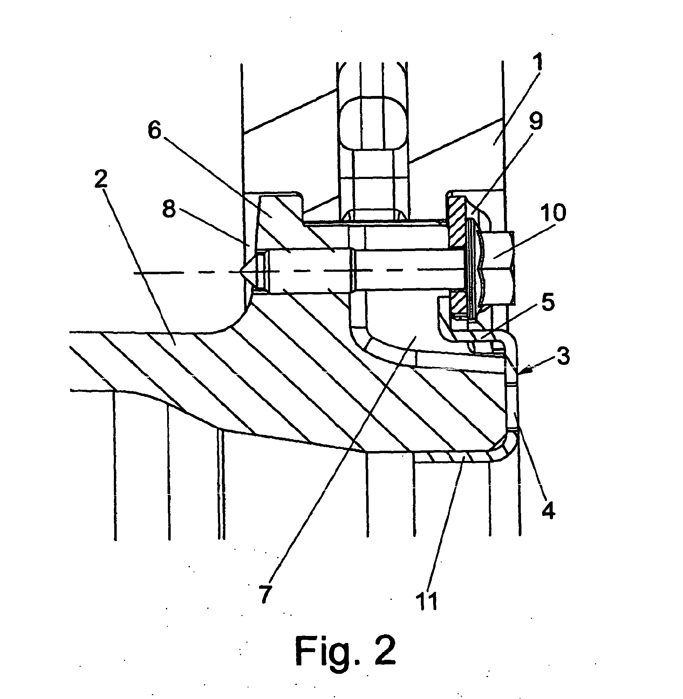

In den Figuren 1 und 2 ist eine Anordnung einer Bremsscheibe 1 an einer Radnabe 2 eines Nutzfahrzeuges dargestellt, bei der die Radnabe 2 über den Außenumfang gleichmäßig verteilte Mitnehmer 6 aufweist, die abständig zueinander angeordnet sind und praktisch eine Verzahnung bilden.

In diese gebildeten Lücken greifen Stützelemente 8 ein, die am Innenumfang der Bremsscheibe 1 angeordnet sind und die in Korrespondenz mit den Mitnehmern 6 eine Verdrehsicherung der Bremsscheibe 1 an der Radnabe 2 bilden.

Zur axialen Fixierung der Bremsscheibe 1 sind an einer Seite Sicherungselemente 9 in Form von Blattfedern vorgesehen, die jeweils mittels einer Schraube 10, die in einen Mitnehmer 6 eingedreht ist, an der Radnabe 2 befestigt sind.

Beidseitig der Schraube 10 sich erstreckende Flügel des Sicherungselementes 9 liegen an den dem Mitnehmer 6 benachbarten Stützelementen 8 an.

Auf die den Sicherungselementen 9 zugewandte freie Stirnseite der Radnabe 2 ist ein Polrad 3 aufgesetzt, das mit ausgestanzten Fenstern 4 versehen ist, die in Funktion mit einem nicht dargestellten ortsfesten Sensor korrespondieren und gemeinsam Teile eines Antiblockiersystems bilden.

Weiter weist das Polrad 3 an seinem Innenumfang einen umlaufenden Schenkel 11 auf, der an der Innenwandung der Radnabe 2 anliegt, so dass das Polrad 3 radial abgestützt ist.

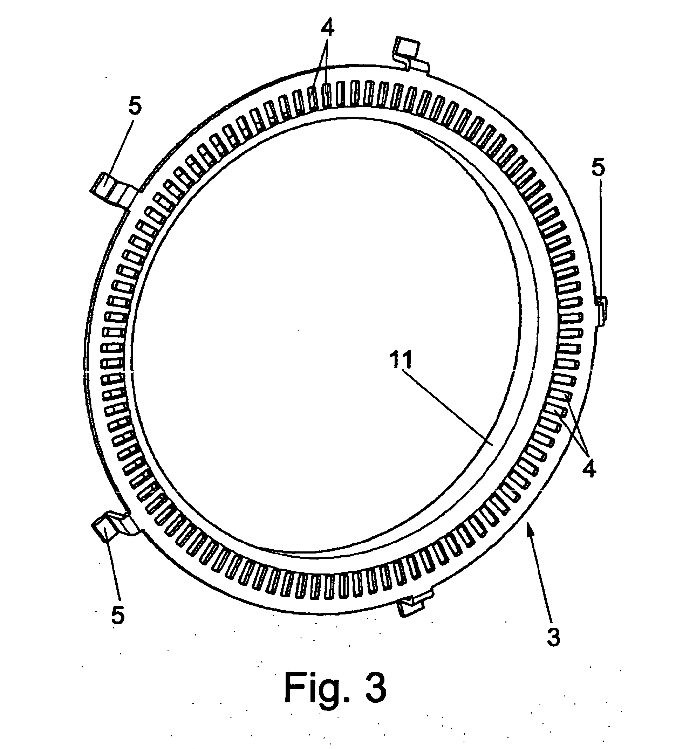

Zur Verdrehsicherung und zur axialen Sicherung des Polrades 3 sind am Außenumfang mehrere Anschlussteile in Form von abgewinkelten Anschlusslaschen 5 angeformt, was insbesondere in der Figur 3 sehr deutlich zu erkennen ist.

Diese Anschlusslaschen 5 liegen jeweils in einer Ausnehmung 7 eines Mitnehmers 6 ein, dessen Breite der Breite der Anschlusslasche 5 entspricht.

Ein Schenkel der Anschlusslasche 5 erstreckt sich radial und hintergreift das Sicherungselement 9, d.h., dieser Schenkel liegt an der Rückseite des Sicherungselementes 9 an, wobei die Anschlusslasche 5 und damit das Polrad 3 insgesamt verspannt werden.

Zweckmäßigerweise sind eine geringere Anzahl von Anschlusslaschen 5 vorgesehen als Sicherungselemente 9, was zumindest eine Demontage des Polrades 3 erleichtert, da dann entsprechend wenig Schrauben 10 zu lösen sind, um die durch die Sicherungselemente 9 bestehende Fixierung zu lösen. Bevorzugt sind dabei die Anschlusslaschen 5 in gleichem Winkelabstand zueinander angeordnet.

### Bezugszeichenliste

- 1: Bremsscheibe
- 2: Radnabe
- 3: Polrad
- 4: Fenster
- 5: Anschlusslasche
- 6: Mitnehmer
- 7: Ausnehmung
- 8: Stützelement
- 9: Sicherungselement
- 10: Schraube
- 11: Schenkel

## Patentansprüche

1. Anordnung mit einer Bremsscheibe (1) und einer Radnabe (2), insbesondere eines Nutzfahrzeuges, an der die Bremsscheibe (1) angeordnet ist, mit mehreren am Innenumfang der Bremsscheibe (1) verteilten Stützelementen (8), die mit am Außenumfang der Radnabe (2) angeordneten Mitnehmern (6) im Sinne einer Verdrehsicherung korrespondieren, und mit Sicherungselementen (9), die zur axialen Sicherung der Bremsscheibe (1) sowohl an den Mitnehmern (6) wie auch benachbarten Stützelementen (8) anliegen, sowie einem im Anschlussbereich der Bremsscheibe (1) an der Radnabe (2) angeordneten Polrad (3), wobei das Polrad (3) zur axialen und verdrehgesicherten Festlegung Anschlussteile aufweist,
**dadurch gekennzeichnet, dass** die Anschlussteile jeweils eines der Sicherungselemente (9) hintergreifen.

2. Anordnung nach Anspruch 1, **dadurch gekennzeichnet, dass** die Anschlussteile als Anschlusslaschen (5) ausgebildet sind.

3. Anordnung nach Anspruch 1 oder 2, **dadurch gekennzeichnet, dass** die Anschlusslaschen (5) am Außenrand des Polrades (3) angeformt sind.

4. Anordnung nach einem der vorhergehenden Ansprüche, **dadurch gekennzeichnet, dass** die Anschlusslaschen (5) abgewinkelt sind, wobei ein radial verlaufender Schenkel an der Rückseite des zugeordneten Sicherungselementes (9) anliegt.

5. Anordnung nach einem der vorhergehenden Ansprüche, **dadurch gekennzeichnet, dass** die Anschlusslaschen (5) in Ausnehmungen (7) der Mitnehmer (6) einliegen.

6. Anordnung nach einem der vorhergehenden Ansprüche, **dadurch gekennzeichnet, dass** die Ausnehmungen (7) in ihrer Breite der Breite der Anschlusslaschen (5) entsprechen.

7. Anordnung nach einem der vorhergehenden Ansprüche, **dadurch gekennzeichnet, dass** das Polrad (3) zur radialen Sicherung einen axial ausgerichteten umlaufenden Schenkel (11) aufweist, der an der Innenwandung der Radnabe (2) anliegt.

8. Anordnung nach einem der vorhergehenden Ansprüche, **dadurch gekennzeichnet, dass** die Anschlusslaschen (5) in gleichem Winkelabstand zueinander angeordnet sind.

9. Anordnung nach einem der vorhergehenden Ansprüche, **dadurch gekennzeichnet, dass** die Anschlusslaschen (5) vom Sicherungselement (9) mit Klemmkraft beaufschlagt sind.

10. Anordnung nach einem der vorhergehenden Ansprüche, **dadurch gekennzeichnet, dass** die Ausnehmungen (7) mittig in den Mitnehmern (6) vorgesehen sind.

11. Anordnung nach einem der vorhergehenden Ansprüche, **dadurch gekennzeichnet, dass** die Ausnehmungen (7) auf einer gemeinsamen Radialachse mit Gewindebohrungen liegen, die der Aufnahme von Schrauben (10) dienen zur Befestigung der Sicherungselemente (9) an der Radnabe (2).

## Claims

1. An arrangement with a brake disk (1) and a wheel hub (2), in particular of a utility vehicle, at which the brake disk (1) is arranged, having a plurality of support elements (8), which are distributed on the inner circumference of the brake disk (1) and correspond to drivers (6) disposed on the outer circumference of the wheel hub (2) to give an anti-twist lock, and having securing elements (9) which rest against both the drivers (6) and also adjacent support elements (8) so as to axially secure the brake disk (1), and having a magnet wheel (3), which is disposed on the wheel hub (2) in the attachment area of the brake disk (1), wherein the magnet wheel (3) has attachment parts for axial and anti-twist fixing, **characterized in that** the attachment parts each engage behind one of the securing elements (9).

2. The arrangement as claimed in claim 1, **characterized in that** the attachment parts are designed as attachment tabs (5).

3. The arrangement as claimed in claim 1 or 2, **characterized in that** the attachment tabs (5) are formed on the outer rim of the magnet wheel (3).

4. The arrangement as claimed in one of the preceding claims, **characterized in that** the attachment tabs (5) are angled, a radially extending leg resting against the rear side of the associated securing element (9).

5. The arrangement as claimed in one of the preceding claims, **characterized in that** the attachment tabs (5) rest in recesses (7) of the drivers (6).

6. The arrangement as claimed in one of the preceding claims, **characterized in that** the width of the recesses (7) corresponds to the width of the attachment tabs (5).

7. The arrangement as claimed in one of the preceding claims, **characterized in that**, to enable the magnet wheel (3) to be secured radially, said magnet wheel has an axially oriented encircling leg (11) which rests against the inner wall of the wheel hub (2).

8. The arrangement as claimed in one of the preceding claims, **characterized in that** the attachment tabs (5) are disposed at uniform angular intervals relative to one another.

9. The arrangement as claimed in one of the preceding claims, **characterized in that** the attachment tabs (5) are subjected to a clamping force by the securing element (9).

10. The arrangement as claimed in one of the preceding claims, **characterized in that** the recesses (7) are provided centrally in the drivers (6).

11. The arrangement as claimed in one of the preceding claims, **characterized in that** the recesses (7) are arranged on a common radial axis with threaded holes which serve to receive bolts (10) for fastening the securing elements (9) on the wheel hub (2).

## Revendications

1. Dispositif comprenant un disque (1) de frein et un moyeu (2) de roue, notamment d'un véhicule utilitaire, sur lequel le disque (1) de frein est monté, comprenant plusieurs éléments (8) d'appui répartis sur le pourtour intérieur du disque (1) de frein et correspondant au sens d'une sécurité à la torsion avec ces entraîneurs (6) disposés sur le pourtour extérieur du moyeu (2) de roue, et comprenant des éléments (9) de blocage, pour le blocage axial du disque (1) de frein, s'appliquant tant sur les entraîneurs (6) qu'également sur des éléments (8) d'appui voisins, ainsi qu'une roue (3) polaire montée sur le moyeu (2) de roue dans la zone de connexion du disque (1) de frein sur le moyeu (2) de roue, la roue (3) polaire ayant des parties de connexion pour la fixation axiale et à l'encontre de la torsion, **caractérisé en ce que** les parties de connexion prennent par derrière respectivement l'un des éléments (9) de blocage.

2. Dispositif suivant la revendication 1, **caractérisé en ce que** les parties de connexion sont constituées en éclisses (5) de connexion.

3. Dispositif suivant la revendication 1 ou 2, **caractérisé en ce que** les éclisses (5) de connexion sont formées sur le bord extérieur de la roue (3) polaire.

4. Dispositif suivant l'une des revendications précédentes, **caractérisé en ce que** les éclisses (5) de connexion sont coudées, une branche s'étendant radialement s'appliquant au côté arrière de l'élément (9) de blocage associé.

5. Dispositif suivant l'une des revendications précédentes, **caractérisé en ce que** les éclisses (5) de connexion pénètrent dans des évidements (7) des entraîneurs.

6. Dispositif suivant l'une des revendications précédentes, **caractérisé en ce que** les évidements (7) correspondent en largeur à la largeur des éclisses (5) de connexion.

7. Dispositif suivant l'une des revendications précédentes, **caractérisé en ce que** la roue (3) polaire a, pour le blocage axial, une branche (11) faisant le tour et dirigée axialement, qui s'applique à la paroi intérieure du moyeu (2) de roue.

8. Dispositif suivant l'une des revendications précédentes, **caractérisé en ce que** les éclisses (5) de connexion sont disposées les unes par rapport aux autres à une même distance angulaire.

9. Dispositif suivant l'une des revendications précédentes, **caractérisé en ce que** les éclisses (5) de connexion sont soumises à une force de serrage par l'élément (9) de blocage.

10. Dispositif suivant l'une des revendications précédentes, **caractérisé en ce que** les éléments (7) sont prévus au milieu dans les entraîneurs (6).

11. Dispositif suivant l'une des revendications précédentes, **caractérisé en ce que** les évidements (7) se trouvent sur un axe radial commun avec des taraudages, qui servent à la réception de vis (10) pour la fixation des éléments (9) de blocage sur les moyeux (2) de roue.
